# EUROPÄISCHE PATENTSCHRIFT

(11) **EP 1 400 655 B1**
(45) Veröffentlichungstag und Bekanntmachung des Hinweises auf die Patenterteilung: **13.10.2010**
(21) Anmeldenummer: 03021034.8
(22) Anmeldetag: 17.09.2003
(51) Int. Cl.: E21B 17/046

(54) **Kraftübertragungsvorrichtung**
Power transmission device
Mécanisme de transmission de couple

(30) Priorität: 23.09.2002 DE 10244230
(43) Veröffentlichungstag der Anmeldung: 24.03.2004
(73) Patentinhaber: DreBo Werkzeugfabrik GmbH, D-88361 Altshausen (DE)
(72) Erfinder: Weidelener, Oliver, 88422 Alleshausen (DE)
(74) Vertreter: Baronetzky, Klaus

(56) Entgegenhaltungen:
- EP-A- 0 928 668
- EP-A- 1 245 341
- DE-U- 7 429 418
- GB-A- 1 505 907
- US-A- 1 377 418
- US-A- 2 685 462
- US-A- 4 131 165

## Beschreibung

Die Erfindung betrifft eine Kraftübertragungsvorrichtung, gemäß dem Oberbegriff von Anspruch 1.

Aus der US-A-4131165 ist eine derartige Kraftübertragungsvorrichtung bekannt.

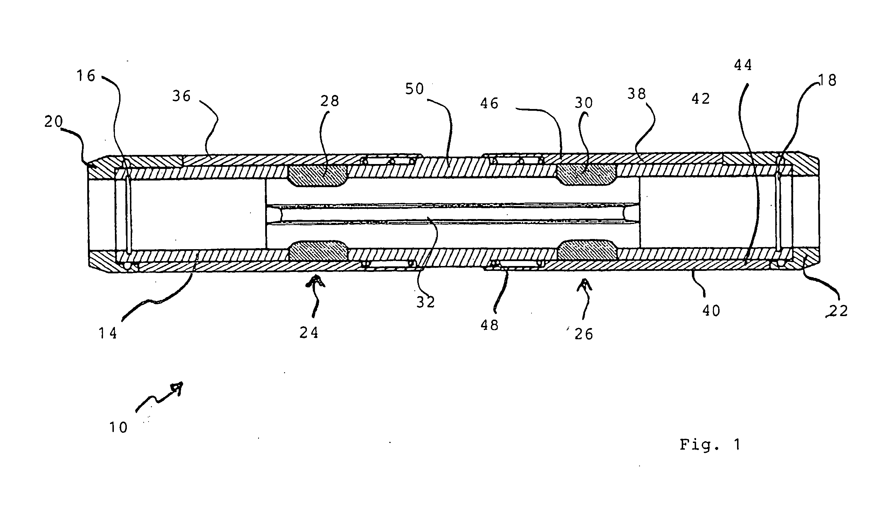

Aus der DE-OS 24 32 105 ist eine andere Kraftübertragungsvorrichtung bekannt. Bei dieser Lösung handelt es sich um einen Bohrschlaghammer, und die Schlagenergie soll von einem Schaftteil auf einen Kopfteil übertragen werden, um den dorti gen Bohrer 331 gemäß Fig. 1 anzutreiben.

Das Verhältnis zwischen der eingebrachten und der abgegebenen Schlagenergie ist bei dieser Lösung unbefriedigend, und es wäre wünschenswert, den Wirkungsgrad der Kupplung zu verbessern.

Bei derartigen Kupplungen besteht das Problem, dass einerseits die Kupplung bei Bedarf nach Möglichkeit ohne Werkzeug betätigt werden können soll und gegebenenfalls sogar ohne größere Schwierigkeiten zu Reinigungszwecken demontiert werden können soll, aber andererseits eine zuverlässige Halterung gewährleistet sein muß, die verhindert, dass sich beispielsweise der Kopfteil versehentlich löst.

Fräskronen und größere Bohrkronen sind recht teuer in der Anschaffung. Daher ist es unökonomisch, für verschiedene Werkzeugaufnahmen wie Keilwelle oder SDS-plus oder SDS-max verschiedene Fräskronen und Bohrkronen gleichen Durchmessers zu beschaffen und bereit zu halten. Bereits von daher besteht Bedarf an einem Kupplungssystem, das den Austausch des Schaftteils je nach der Art der Werkzeugaufnahme an dem betreffenden Bohrhammer oder der Schlagbohrmaschine ermöglicht.

Ferner sind eine Vielzahl von Adaptern vorgeschlagen worden, die je eine zuverlässige Kupplung in Verbindung mit einer guten Schlagenergieübertragung anstreben. Derartige Adpater haben jedoch häufig den Nachteil, dass sie die Bohrerlänge vergrößern, zusätzliches Gewicht einbringen und die Schlagenergie bereits von daher reduzieren. Zudem ist die Demontage häufig schwierig und die Herstellung aufwendig.

Ein weiterer wichtiger Gesichtspunkt bei der Bereitstellung von Kupplungen für Bohrhämmern ist die Schmutzunempfindlichkeit der Kupplung. Gerade beim Über-Kopf-Bohren mit Bohrhämmern entsteht ein erheblicher Anfall von Bohrmehl, das in den Bereich der Kupplung gelangt. Durch Relativbewegungen im Kupplungsbereich kann leicht Bohrmehl in die Kupplung gelangen und die Kupplungsfunktion beeinträchtigen, so dass die Kupplung im Laufe der Zeit schwergängiger wird.

Ferner ist aus der DE 298 00 467 eine Kraftübertragungsvorrichtung bekannt, bei welcher ein Kopfteil eines Bohrwerkzeugs lösbar an einem Schaftteil des Bohrwerkzeugs gelagert ist. Es sind eine Mehrzahl von Verriegelungselementen vorgesehen, die als Abtriebs- bzw. Antriebspassfedern ausgebildet sind. Diese Passfedern übernehmen gleichzeitig die Verriegelungs- und Drehmomentübertragungsfunktion, was jedoch einen gravierenden Nachteil darstellt. Die dortigen Passfedern sind radial beweglich geführt. Dies bedingt ein gewisses Spiel. Bei schlagenden Bewegungen der Werkzeuge, die mit Drehbewegungen zusammenfallen, schlägt die Antriebspassfeder und die Abtriebspassfeder je in ihrer Führung wechselseitig seitlich an, um die anfallenden Drehmomente zu übertragen. Dies führt jedoch dazu, dass die aufeinander aufprallenden und durch die Verkantung aneinander arbeitenden Oberflächen verschleißen, so dass sich das Spiel vergrößert.

Dementsprechend ist es vorgeschlagen worden, entsprechende Passfedern aus Hartmetall vorzusehen, um den Verschleiß an den Passfedern zu reduzieren. Zwar lässt sich hierdurch tatsächlich der Verschleiß an der Antriebspassfeder vermindern, so dass die Lebensdauer etwas verlängert ist. Der Verschleiß in der Führung, also der Kupplungshülse, ist jedoch gleich oder sogar noch größer, so dass diese Lösung ungeeignet ist.

In diesem Zusammenhang ist es wichtig, zu verhindern, dass die Passfedern aus ihren Führungen herausfallen. Ein derartiges Versagen ist ausgesprochen gefährlich, denn der Bohrer kann sich dann von dem Schaft lösen und unkontrolliert weggeschleudert werden, so dass eine signifikante Unfallgefahr besteht, wenn die Passfedern versagen.

Zwar könnte die Kupplungshülse mit einer größeren Materialstärke hergestellt werden, um ein Versagen der Führung weniger wahrscheinlich zu machen. Dies würde zum Einen jedoch keine vollständige Sicherheit bieten, zum Anderen wäre hierdurch das Gewicht des Bohrers erhöht, was unerwünscht ist und die Handhabung auch dadurch erschwert, dass das Bohren in tiefe Sacklöcher bei entsprechend kleinem Bohrungsdurchmesser durch eine relativ große Kupplungsabmessung erst gar nicht möglich wird. Schließlich wären die Herstellungskosten deutlich höher.

Ferner käme es theoretisch auch in Betracht, die Führungen für die Verriegelungselemente in der Kupplungshülse speziell zu härten. Eine derartige Lösung würde ebenfalls den Verschleiß reduzieren, wäre jedoch zum Einen ausgesprochen aufwändig und würde zum Anderen ebenfalls keine vollständige Sicherheit bieten, dass nicht doch eine gefährliches Versagen auftritt.

Auch aus diesem Grund wurde die vorgeschlagene Kupplungshülse trotz der signifikanten Vorteile des zu Grunde liegenden Konstruktionsprinzips bislang nicht oder nicht in nennenswertem Umfang eingesetzt.

Daher liegt der Erfindung die Aufgabe zu Grunde, eine Kraftübertragungvorrichtung gemäß dem Oberbegriff von Anspruch 1 sowie eine entsprechende Bohrvorrichtung gemäß dem Oberbegriff von Anspruch 29 zu schaffen, die eine schlanke, aber dennoch betriebssichere Lösung für die Kraft- und Energieübertragung erlaubt.

Diese Aufgabe wird erfindungsgemäß durch Anspruch 1 gelöst. Vorteilhafte Weiterbildungen ergeben sich aus den Unteransprüchen.

Die erfindungsgemäße Lösung zeichnet sich dadurch aus, dass die Drehmomentübertragung über feststehende Drehmitnahmeelemente völlig entkoppelt von der Verriegelung ist. Mit den erfindungsgemäßen Drehmitnahmeelementen lässt sich sicherstellen, dass die anfallenden Drehmomente über feststehende und von den Verriegelungselementen getrennte Elemente und auf Grund dadurch ihrer größer möglichen Dimensionierung sicher und nahezu verschleißfrei übertragen werden.

Die beweglichen Verriegelungselemente sind daher der Kraftübertragungsaufgabe enthoben, so dass sie preisgünstig und einfach gehalten sein können. Die Führung kann schlank sein, was dem geringen Gesamtdurchmesser der Kupplungshülse zugute kommt. Die erfindungsgemäße Lösung zeichnet sich durch die Realisierung eines besonderen Sperrglieds aus, das die Verriegelungselemente umgibt und sicherstellt, dass nicht im Betrieb Störungen entstehen. Durch die bündige Ausgestaltung der Oberfläche lässt sich gewährleisten, dass zum Einen das Eindringen von Schmutz verhindert wird und dass zum Anderen keine sich aufspreizende Feder, die zudem verloren gehen kann, eine Verletzungsgefahr mit sich bringt. Demgegenüber ist es erfindungsgemäß günstig, wenn das Sperrglied nach der Art einer Hülse die Verriegelungselemente umgibt; erfindungsgemäß weist das Sperrglied Ausnehmungen auf, die an einer entsprechenden Drehposition die radiale Bewegung der Verriegelungselemente für das Lösen der Kupplung ermöglichen und in einer anderen Drehposition sperren und die gesperrte Position der Verriegelungselemente verriegeln.

Durch die kombinierte Dreh- und Axialbewegung des Sperrglieds ist auch die Neigung des Sperrglieds ausgeschlossen, sich bei Anlage an das Bohrloch durch die entsprechende Drehbewegung versehentlich zu lösen.

Durch die geschlossene Ausführung des erfindungsgemäßen Sperrglieds lässt sich gewährleisten, dass so wenig Schmutz wie möglich eintritt, und damit auch kein Bohrmehl die Bewegung von Verriegelungselemente beeinträchtigen kann.

Erfindungsgemäß ist es besonders günstig, dass durch das Vorsehen zweier zueinander symmetrischer Sperrglieder eine universelle Verwendbarkeit der erfindungsgemäßen Kraftübertragungsvorrichtung für unterschiedliche Kopfteile und Schaftteile besteht. So kann durch die erfindungsgemäße Kraftübertragungsvorrichtung ohne zusätzlichen Adapter eine Werkzeugaufnahme mit Keilwelle, mit SDS-plus-, mit SDS-max-Aufnahme oder mit Mehrkant-Aufnahme, ohne weiteres für die gleiche Bohrkrone realisiert werden. Durch die erfindungsgemäße Lösung mit den radial abgestützten Verriegelungselementen ist sicher verhindert, dass die Verriegelungselemente während des Betriebs nach außen gedrückt werden und sich damit der Bohrkopf versehentlich löst. Ferner ist es besonders günstig, daß die Drehmomentübertragung über separate, fest mit der Kupplungshülse verbundene, vorzugsweise einstückige Drehmitnahmeelemente erfolgen kann, so daß der Verschleiß an den Verriegelungselementen und -nuten deutlich reduziert ist.

Durch die ausgesprochen geringe Masse der erfindungsgemäßen Kraftübertragungsvorrichtung entsteht ein hoher Wirkungsgrad bei der Übertragung der Schlagenergie, zumal auch keine verschleißanfälligen Gewinde oder dergleichen als Kupplungselement verwendet werden müssen. Dennoch ist die Kraftübertragungsvorrichtung ausgesprochen schlank, so dass das Arbeiten mit dem so erstellten Bohrwerkzeug nicht behindert ist.

Erfindungsgemäß besonders günstig ist insofern die Aufteilung der Funktionen der axialen Verriegelung und der Drehmomentübertragung auf zwei separate Elemente. Diese Aufteilung erlaubt auch eine konstruktive Vereinfachung dahingehend, dass bei Bedarf eine leichte Demontage und Montage der Kupplung, beispielsweise zu Reinigungszwecken, möglich ist. Durch ein einfaches axiales Verschieben und Drehen der Sperrglieder sind die Verriegelungselemente in ihrer Radialführung freigegeben und können nach außen gedrückt werden. In dieser Beziehung ist es günstig, wenn die Verriegelungsnuten leicht schräg auslaufen, so dass sie die Verriegelungselemente beim Herausziehen des jeweiligen Endes nach außen drücken.

Erfindungsgemäß besonders günstig ist die Realisierung einer Stirnfläche der Enden als Stoßfläche, die sich im wesentlichen über den gesamten Durchmesser des Schafts plan erstreckt und lediglich am Außenrand je mit einer Fase versehen ist, die das Einführen jedes Endes in die Kupplungshülse vereinfacht.

Erfindungsgemäß läßt sich die Kraftübertragungsvorrichtung ausgesprochen einfach realisieren und es ist möglich, die erfindungsgemäße Kraftübertragungsvorrichtung kostengünstig herzustellen.

Gegenüber einer reinen Konusverbindung hat die erfindungsgemäße Lösung den Vorteil, dass eine Verriegelung möglich ist, so dass die Unfallgefahr reduziert ist und dass zur Demontage keine weiteren Werkzeuge erforderlich sind.

Gemäß einer besonders günstigen Ausgestaltung ist es vorgesehen, dass die Abmessungen der erfindungsgemäßen Kupplungshülse nur um weniges größer als der Schaft des Bohrers oder Meißels ist. Durch diese Maßnahme ist ein Einsatz in tieferen Bohrungen jedenfalls ohne weiteres möglich, wobei die Kupplungshülse mit in die Bohrung eintaucht, wenn als Werkzeug eine Bohrkrone oder ein Meißel mit einem Durchmesser verwendet wird, der größer als der Durchmesser des Schafts und ebenfalls größer als der Durch- messer der Kupplungshülse ist.

Gemäß einem weiteren besonders günstigen Gesichtspunkt ist es vorgesehen, eine Kraftübertragungsvorrichtung mit einer erfindungsgemäßen Kupplung zu schaffen, die ein Schaftteil mit einem Bohrer- oder Meißelwerkzeug verbindet und verriegelbar ist. Durch Realisierung einer erfindungsgemäß glatten Außenfläche der Kupplungshülse entsteht eine Kraftübertragungsvorrichtung, die überraschend störungsunempfindlich arbeitet. Nachdem sich aufgrund der glatten Außenfläche kein Bohrstaub oder dergleichen ansetzt beziehungsweise etwaiges dort in Kontakt geratenes Bohrmehl gleich abfällt, ist es erfindungsgemäß günstig, dass auch beim etwaigen Anlehnen der Kupplungshülse an die Bohrlochwand, wenn die Kupplungshülse mit in das Bohrloch eingedrungen ist, keine relevante zusätzliche Reibung entsteht.

Insbesondere wird aber durch die glatte Außenfläche verhindert, dass sich die Verriegelungselemente durch die Reibung entriegeln und damit Unfälle verhindern.

Die glatte Außenfläche läßt sich auch durch die Realisierung von Anschlaghülsen fördern, an denen die Verriegelungselemente gegen ihre Verriegelungsfedern wirken je abgestützt sind und die sich an den Enden der Kuplungshülsle erstrecken. Gerade für den rauhen Betrieb läßt sich so die erfindungsgemäße Übertraggungsvorrichtung optimal schützen, und zwar sowohl gegen ein versehentliches Anschlagen oder eine rauhe mechanischen Behandlung als auch gegen das Eindringen von Bohrstaub.

Insbesondere durch die erfindungsgemäß besonders gestalteten Verriegelungselemente läßt sich ein hoher Wirkungsgrad der erfindungsgemäßen Kupplung erzielen, der es ermöglicht, dass nahezu die gesamte eingeleitete Schlagenerie der Bohrkrone oder dem Meißel zugeleitet wird.

Weitere Vorteile, Einzelheiten und Merkmale ergeben sich aus der nachfolgenden Beschreibung zweier Ausführungsbeispiele der Erfindung anhand der Zeichnung.

Es zeigen:
- Fig. 1: eine vergrößerte Ansicht einer Kraftübertragungsvor richtung für die Realisierung eines erfindungsgemäßen Bohrwerkzeugs in einer Ausführungsform;
- Fig. 2: die Kraftübertragungsvorrichtung gemäß Fig. 1, wobei ein Schaftteil und ein Kopfteil eingesteckt sind;
- Fig. 3: eine Ansicht eines erfindungsgemäßen Bohrwerkzeugs im Schnitt, unter der Verwendung der Kraftübertragungsvorrichtung gemäß Fig. 1 und 2;
- Fig. 4: eine perspektivische Ansicht der Ausführungsform des erfindungsgemäßen Bohrwerkzeugs gemäß Fig. 3;
- Fig. 5: eine perspektivische Ansicht einer weiteren Ausführungsform eines erfindungsgemäßen Bohrwerkzeugs;
- Fig. 6: ein Schnitt durch eine Ausführungsform einer erfindungsgemäßen Kraftübertragungsvorrichtung in der Freigabestellung;
- Fig. 7: ein Schnitt durch die Ausführungsform gemäß Fig. 6 in der Verriegelungsstellung; und
- Fig. 8: ein Schnitt durch eine weitere Ausführungsform einer erfindungsgemäßen Kraftübertragungsvorrichtung.

In Fig. 1 ist eine Kraftübertragungsvorrichtung 10 eines erfindungsgemäßen Bohrwerkzeugs 12 im Schnitt dargestellt. Die Kraftübertragungsvorrichtung 10 weist eine Kupplungshülse 14 auf, die sich im Wesentlichen rohrförmig und einstückig erstreckt. Die Kupplungshülse 14 weist einen konstanten Innendurchmesser auf. Endseitig sind Dichtungsnuten 16 und 18 für O-Ringdichtungen vorgesehen.

Auf den Enden der Kupplungshülse 14 ist je eine Führungshülse 20 und 22 drehfest und mit einer eingelegten Dichtung angebracht.

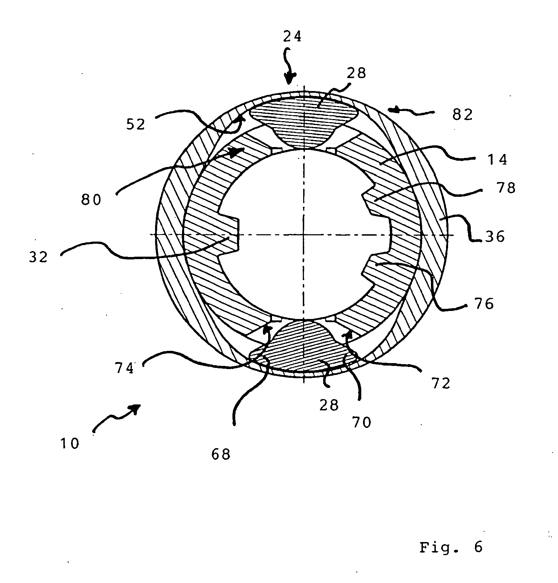

Die Kupplungshülse weist vier um den Umfang gleichmäßig verteilte Aufnahmen 24 und 26 je für Verriegelungselemente 28 und 30 auf. Im dargestellten Ausführungsbeispiel sind die Verriegelungselemente 28 und 30 als Flügelelemente ausgebildet, wie es aus den Figuren 6, 7 und 8 ersichtlich ist. Die Verriegelungselemente 28 und 30 können die Aufnahmen 24 und 26 nach innen teilweise durchtreten, jedoch aufgrund ihrer Flügel nicht nach innen herausfallen.

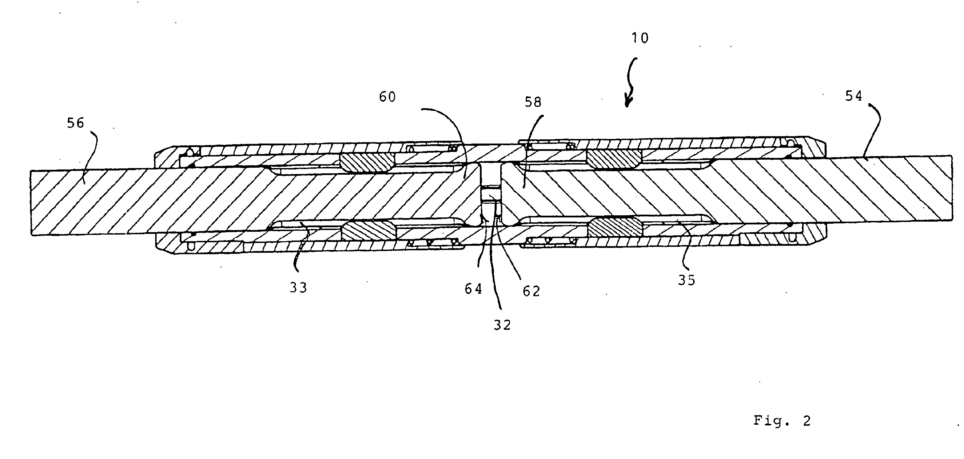

Sie laufen in Verriegelungsnuten 33 und 35, die in Fig. 2 dargestellt sind. Um 90° versetzt zu den Verriegelungsnuten 33 und 35 sind je Drehmitnahmeelemente 32 vorgesehen.

Aus Fig. 1 ist ferner ersichtlich, dass Sperrglieder 36 und 38 schiebebeweglich auf der Kupplungshülse 14 geführt sind. Hierzu weisen die Sperrglieder 36 und 38 je einen Führungsabschnitt auf, wobei der Führungsabschnitt für das Sperrglied 38 in Fig. 1 mit 40 bezeichnet ist. Der Führungsabschnitt 40 liegt mit seiner ringförmigen Innenseite an der Außenseite der Kupplungshülse 14 an. Am rückwärtigen Ende des Führungsabschnitts 40 ist eine Stirnfläche 42 ausgebildet, die einen Zapfen aufweist, der in eine entsprechende Ausnehmung in der Führungshülse 22 eintritt.

Das Sperrglied 38 weist ferner einen Bewegungsabschnitt 46 auf, der von innen nach außen betrachtet gegenüber dem Führungsabschnitt 40 zurückspringt. Dieser Abschnitt nimmt eine Druckfeder 48 auf, die zwischen einer Schulter zwischen Führungsabschnitt und Bewegungsabschnitt und einer entsprechenden Schulter an der Kupplungshülse 14 wirkt und das Sperrglied 38 nach außen, also zu dem ihr zugeordneten Kopf- oder Schaftteil hin, drückt.

Der Bewegungsabschnitt 46 ist recht schlank ausgebildet, aber so, dass er auf einem verdickten Bereich 50 der Kupplungshülse 14 gleiten kann. Hierdurch ist eine im wesentlichen glatte Außenfläche der erfindungsgemäßen Kraftübertragungsvorrichtung 10 sichergestellt.

In dem in Fig. 1 dargestellten Zustand des Sperrglieds 38 ist die Kraftübertragungsvorrichtung 10 in eingekuppeltem Zustand. In diesem Zustand drückt der Führungsabschnitt 40 das Sperrglied 38 die Verriegelungselemente 30 durch die Aufnahme 26 nach innen hindurch, so dass sie in die Verriegelungsnuten 33 und 35 eingreifen. Die Verriegelungselemente 28 und 30 sind innen an dem Sperrglied 38 abgestützt. In diesem Zustand können die Verriegelungselemente 28 und 30 nach außen nicht ausweichen und sind auch seitlich in der Aufnahme 24 und 26 im wesentlichen spielfrei abgestützt.

Wird das Sperrglied 38 manuell gegen die Wirkung der Druckfeder 48 nach innen bewegt, geraten die Verriegelungselemente 28 und 30 in den Bereich einer Ausnehmung 52 (vgl. Fig. 6). Dort sind sie frei nach außen beweglich, so dass die Kraftübertragungsvorrichtung durch die Bewegung des Verriegelungselements außer Eingriff gerät und das zugehörige Kopfteil oder Schaftteil frei entnommen werden kann.

Besonders günstig ist es ferner, dass für das Lösen der Kupplung zwei Bewegungsrichtungen erforderlich sind, so dass die Wahrscheinlichkeit, dass es zum unbeabsichtigen Lösen der Kupplung kommt, deutlich reduziert ist. Die Federkraft der Feder 48 ist so gewählt, dass sie den Zapfen 44 in die betreffende Ausnehmung der Führungshülse auch dann einschnappen läßt, wenn eine gewisse Verschmutzung vorliegt. Damit ist es für das Herstellen der Verbindung lediglich erforderlich, eine Drehbewegung vorzunehmen. Für das Lösen der Kupplung - die kritischere Aktion - muss hingegen zunächst eine Schiebebewegung in der natürlichen Richtung, und dann eine zusätzliche Drehbewegung vorgenommen werden.

Besonders günstig ist es hierbei, dass der Drehwinkel durch eine entsprechend angeordnete Profilierung zwischen Führungshülse und Sperrglied auf beispielsweise 90° begrenzt ist, so dass nicht versehentlich eine Fehlstellung entsteht. Zudem ist es günstig, wenn - in Richtung des Bohrerkopfes betrachtet - die Drehbewegung zum Lösen des Sperrglieds je nach rechts gerichtet ist. Ein an der Wandung des Bohrlochs reibender Bohrer würde die Sperrglieder einer Links-Drehbewegung unterwerfen, so dass die Wahrscheinlichkeit des versehentlichen Lösens geringer ist. Dies gilt sowohl für das Sperrglied 36 als auch für das Sperrglied 38, so dass diese beiden Sperrglieder - und ihre zugehörigen Führungshülsen 20 und 22 - bevorzugt nicht symmetrisch zueinander ausgebildet sind, sondern mit der gleichen Drehrichtung sperren und schließen.

Aus Fig. 2 ist ersichtlich, in welcher Weise ein Kopfteil 54 und ein Schaftteil 56 in die Kraftübertragungsvorrichtung 10 eingesetzt sein können. Die Drehmitnahmenuten und die Verriegelungsnuten 33 und 35 erstrecken sich über eine Länge, die deutlich größer als der Hub des Schlagbohrers oder Bohrhammers ist. Die Enden 58 und 60 von Kopfteil 54 und Schaftteil 56 sind mit Stoßflächen 62 und 64 ausgestattet, so dass die von dem Schaftteil eingeleitete Schlagenergie recht verlustarm auf das Kopfteil 54 übertragbar ist.

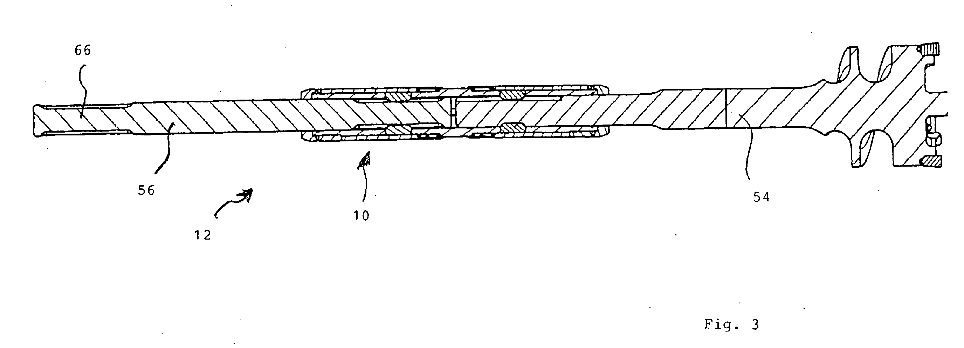

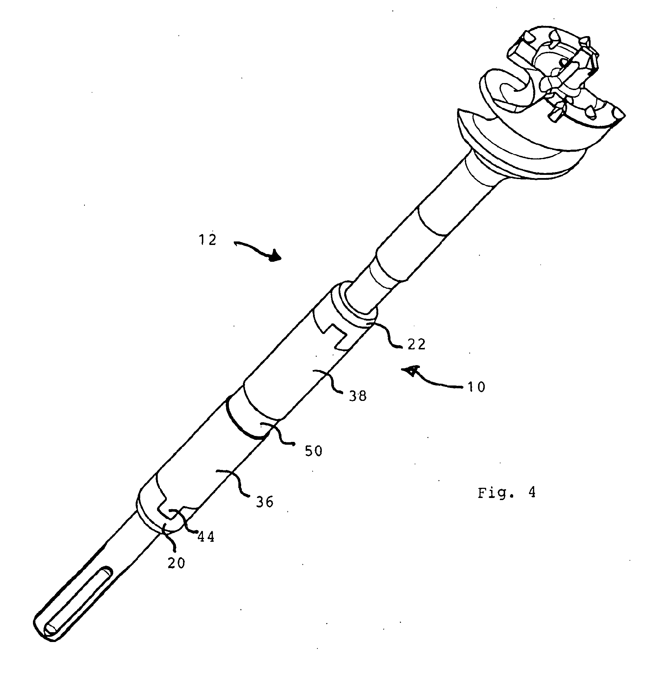

Aus Fig. 3 und 4 ist ersichtlich, wie ein erfindungsgemäßes Bohrwerkzeug 12 in geeigneter Weise ausgestaltet sein kann. Es ist ersichtlich, dass die erfindungsgemäße Kraftübertragungsvorrichtung 10 recht schlank gebaut und den Schaftdurchmesser nur unwesentlich erhöht.

Aus Fig. 3 und 4 ist ein Schaftteil 56 mit einer SDS-plus-Werkzeugaufnahme 66 ersichtlich. Zur Verwendung des gleichen Bohrkopfes an einer anderen Schlagbohrmaschine oder einem anderen Bohrhammer kann auch eine Keilwellen-Werkzeugaufnahme eingesetzt werden, so dass lediglich das Schaftteil 56 ausgetauscht werden muß.

Fig. 4 zeigt ein erfindungsgemäßes Bohrwerkzeug 12 mit einer Kraftübertragungsvorrichtung 10 in dem verriegelten Zustand. Es ist ersichtlich, dass die Zapfen 44 in entsprechende Ausnehmungen in den Führungshülsen 20 und 22 eintauchen und dort sicher arretiert sind. Auch hier ist die Oberfläche zwischen den Sperrgliedern 36 und 38 sowie den Führungshülsen 20 und 22 bündig. Durch eine aus der Figur nicht ersichtlichen Drehanschlag in den Führungshülsen 20 und 22 - und einen Anschlag in den Sperrgliedern 36 und 38 - wird die Drehbewegung auf 90° begrenzt.

Zwischen den Sperrgliedern 36 und 38 erstreckt sich der verdickte Bereich 50 der Kupplungshülse. Dieser hat einen minimal geringeren Durchmesser als die Sperrglieder 36 und 38, wobei der dortige Bewegungsabschnitt der Sperrglieder als Schürze zur Abdeckung der dort vorgesehenen Druckfedern ausgebildet ist. In diesem Zusammenhang ist es günstig, dass dort keine axialen oder gar tangentialen Kräfte übertragen werden müssen, so dass für die reine Abdeckfunktion eine dünne Schürze ausreicht.

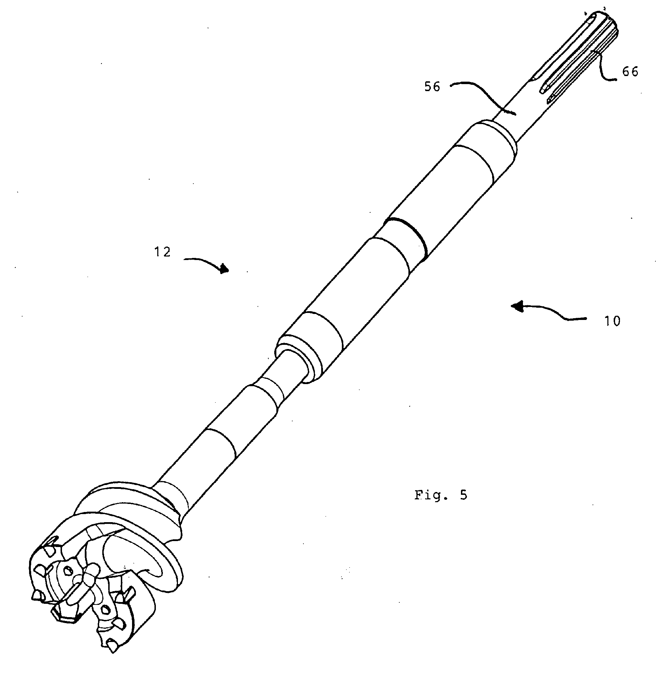

Aus Fig. 5 ist eine weitere Ausführungsform eines erfindungsgemäßen Bohrwerkzeugs ersichtlich. In dieser Ausführungsform ist das Schaftteil 56 mit einer SDS-max-Werkzeugaufnahme 66 versehen. Durch einen entsprechenden Austausch des Schaftteils kann das recht teure Bohrwerkzeug 12 universell bei den unterschiedlichen verbreiteten Systemen verwendet werden.

Aus Fig. 6 ist ein Schnitt durch eine erfindungsgemäße Kraftübertragungsvorrichtung 10 in einer weiteren Ausführungsform ersichtlich. In dieser Stellung sind die Verriegelungselemente 28 so vorgesehen, dass sie je in die Ausnehmungen 52 in dem Sperrglied 36 eintreten. Dementsprechend ist die dargestellte Stellung die Freigabestellung.

Die Verriegelungselemente 28 weisen eine besondere Ausgestaltung auf. Sie sind je mit Flügeln 68, 70 ausgestattet, die auf entsprechenden, nach außen divergierenden Auflageflächen 72 und 74 in der Verriegelungsstellung aufliegen können. Die Auflage ist breit vorgesehen, und zudem außerhalb der Kraftübertragung, die für die Verriegelungselemente 28 vorgesehen ist. Die Verriegelungselemente übertragen Kräfte hauptsächlich in axialer Richtung, also zwischen ihren Stirnflächen und den betreffenden Endflächen der Aufnahmen 24 und 26. Auch bei dort bestehendem Verschleiss sind sie noch großflächig zwischen den Flügeln 68 und 70 und den Auflageflächen 72 und 74 abgestützt, so dass auch bei recht stark verschlissenen Kraftübertragungsvorrichtungen keine Gefahr besteht, dass die Verriegelungselemente 28 nach innen durchfallen.

In dem dargestellten Ausführungsbeispiel weist die Kupplungshülse 14 ein Drehmitnahmeelement 32 und zwei ihr gegenüberliegenden Drehmitnahmeelemente 76 und 78 auf. Diese Ausgestaltung entspricht der SDS-max-Aufnahme, so dass diese Lösung kupplungsseitig mit der SDS-max-Aufnahme kompatibel ist. Es versteht sich, dass anstelle dessen eine beliebige andere Ausgestaltung gewählt werden kann, wobei es erfindungsgemäß wesentlich ist, die Drehmitnahme von der Verriegelung der Kraftübertragungsvorrichtung zu trennen.

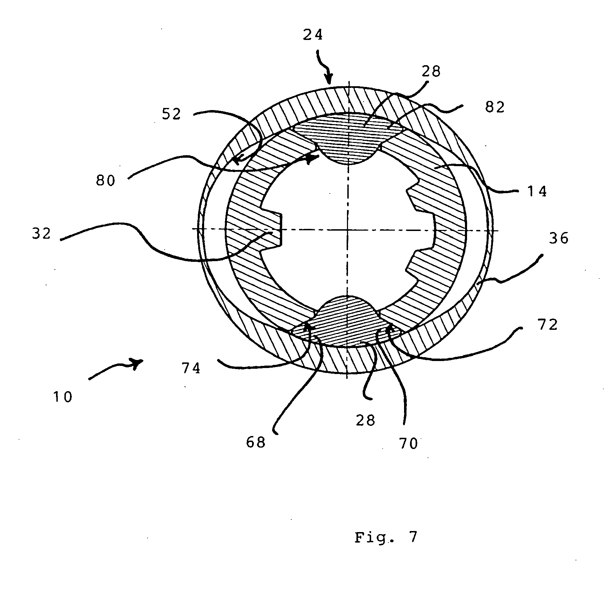

Jedes Verriegelungselement weist einen Sperrabschnitt 80 und einen Auflageabschnitt 82 auf. Durch diese Zweiteilung des Verriegelungselements lässt sich gewährleisten, dass selbst bei verschleissintensiver Handhabung die Sicherheitsfunktion gewährleistet ist. Der Auflageabschnitt ist außen teilkreisförmig ausgebildet, so dass er in der Verriegelungsposition gemäß Fig. 7 mit dem Außendurchmesser der Kupplungshülse 14 harmoniert. Demgegenüber ist die Innenform des Sperrabschnitts an die Form der Verriegelungsnuten angepasst und füllt diese im Wesentlichen aus.

Die Verriegelungselemente können bevorzugt aus Hartmetall ausgebildet sein.

Die Ausführungsform der Kraftübertragungsvorrichtung gemäß Fig. 6 ist in Fig. 7 in der Verriegelungsposition dargestellt. Gleiche Bezugzeichen weisen hier auf gleiche Teile hin. Es ist ersichtlich, dass die Verriegelungselemente 28 in der Verriegelungspositon gemäß Fig. 7 außen an dem Sperrglied 36 anliegen, so dass sie Kopfteil bzw. Schaftteil über deren Verriegelungsnut verriegeln.

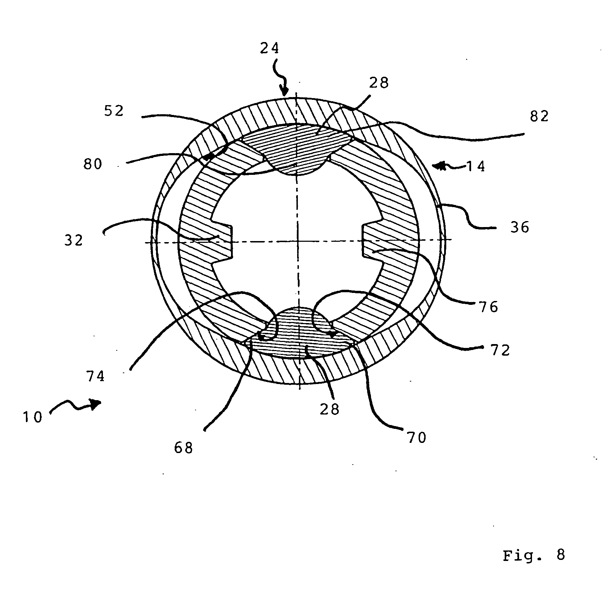

Die Ausführungsform gemäß Fig. 8 sieht demgegenüber eine SDSplus-Realisierung der Kupplungshülse 14 vor. Diese Lösung ist bei kleineren Bohrerdurchmessern bevorzugt, während die Ausgestaltung gemäß Fig. 7 bei größeren Durchmessern bevorzugt ist, wobei es sich versteht, dass die erfindungsgemäße Lösung nicht auf eine dieser Ausgestaltungen beschränkt ist.

## Patentansprüche

1. Kraftübertragungsvorrichtung zur lösbaren Lagerung eines Kopfteils (54) und eines Schaftteils (56), mit mindestens je einem Verriegelungselement (28; 30), das für den Eingriff in Nuten des Kopfteilendes und des Schaftteilendes bestimmt ist und an einer Kupplungshülse (14) gelagert ist, wobei mindestens ein die Verriegelungselemente (28, 30) umgebendes und sperrendes Sperrglied (36, 38) drehbeweglich und insbesondere auch axial beweglich auf der Kupplungshülse gelagert ist, wobei die Kupplungshülse (14) zusätzliche Drehmitnahmeelemente (32, 76, 78) aufweist,
**dadurch gekennzeichnet, dass** das mindestens eine Sperrglied (36, 38) Ausnehmungen (52) aufweist, welche derart angeordnet sind, dass sie an einer entsprechenden Drehposition eine radiale Bewegung der Verriegelungselemente (28, 30) für das Lösen der Verbindung zwischen Kopfteil und Schaftteil ermöglichen und in einer anderen Drehposition, die Verriegelungselemente (28, 30) in einer Verriegelungsstellung bringbar sind.

2. Kraftübertragungsvorrichtung nach Anspruch 1,
**dadurch gekennzeichnet, dass** das Sperrglied (36, 38) je eine Ausnehmung (52) für jedes Verriegelungselement (28, 30, 70, 72) aufweiset, wobei die Verriegelungselemente (28, 30) sich im Wesentlichen diametral gegenüber liegen.

3. Kraftübertragungsvorrichtung nach einem der vorhergehenden Ansprüche,
**dadurch gekennzeichnet, dass** das Sperrglied (36, 38) um einen vorgegebenen Winkel, insbesondere um 30° bis 150° und bevorzugt etwa um 90°, auf der Kupplungshülse (14) drehbeweglich gelagert ist.

4. Kraftübertragungsvorrichtung nach einem der vorhergehenden Ansprüche,
**dadurch gekennzeichnet, dass** die Lagerung des Sperrglieds (36, 38) auf der Kupplungshülse (14) eine Rastposition aufweist, in der das Verriegelungselement (28, 30) verdrehsicher in der Verriegelungsstellung einschnappt oder einrastet und somit eine radiale Bewegung der Verriegelungselemente (28, 30) verhindert.

5. Kraftübertragungsvorrichtung nach einem der vorhergehenden Ansprüche,
**dadurch gekennzeichnet, dass** das Sperrglied (36, 38) einen Zapfen (44) aufweist, der auf einer entsprechenden Zapfenausnehmung einer drehfest mit der Kupplungshülse verbundenen Führungshülse (20, 22) in der Verriegelungsposition eingreift.

6. Kraftübertragungsvorrichtung nach Anspruch 5,
**dadurch gekennzeichnet, dass** das Sperrglied (36, 38) und die Führungshülse (20, 22) in der Verriegelungsposition eine bündige Außenoberfläche aufweisen.

7. Kraftübertragungsvorrichtung nach einem der vorhergehenden Ansprüche,
**dadurch gekennzeichnet, dass** das Sperrglied (36, 38) als geschlossene Hülse ausgebildet ist, die eine im Wesentlichen glatte Außenoberfläche aufweist.

8. Kraftübertragungsvorrichtung nach einem der vorhergehenden Ansprüche,
**dadurch gekennzeichnet, dass** jedes Verriegelungselement (28, 30) eine Führungsaufnahme (24, 26) in der Kupplungshülse (14) aufweist, die sich insbesondere zwischen zwei axialen planen, konvexen und konkaven, insbesondere ebenen Anschlagflächen erstreckt, zwischen denen das Verriegelungselement (28, 30) geführt ist.

9. Kraftübertragungsvorrichtung nach einem der vorhergehenden Ansprüche,
**dadurch gekennzeichnet, dass** eine Führungsaufnahme (24, 26) in der Kupplungshülse (14) für das Verriegelungselement (28, 30) insbesondere schräge und ebene Auflageflächen (73, 74) aufweist, die der radialen Abstützung des Verriegelungselements (28, 30) nach innen dienen und mit Flügeln (68, 70) des Verriegelungselements zusammenwirken.

10. Kraftübertragungsvorrichtung nach einem der vorhergehenden Ansprüche,
**dadurch gekennzeichnet, dass** jedes Verriegelungselement (28, 30) einen Sperrabschnitt und einen Auflageabschnitt (72, 74) aufweist, der sich radial außerhalb des Sperrabschnitts erstreckt, dass der Sperrabschnitt im Querschnitt kreisabschnittsförmig ausgebildet ist und dass sich von dem Sperrabschnitt ausgehend Flügel (68, 70) des Auflageabschnitts (73, 74) in tangentialer Richtung der Kupplungshülse (14) erstrecken und insbesondere der Auflageabschnitt außen einen Radius aufweist, der im Wesentlichen dem Außenradius der Kupplungshülse (14) entspricht.

11. Kraftübertragungsvorrichtung nach einem der vorhergehenden Ansprüche,
**dadurch gekennzeichnet, dass** Auflageflächen (72, 74) einer Führungsausnehmung in der Kupplungshülse (14) für das Verriegelungselement (28, 30) und die Auflagefläche von Flügeln (68, 70) eines Aufnahmeabschnitts des Verriegelungselements (28, 30) sich in einem Winkel von 60° bis 160°, insbesondere etwa 120°, zueinander erstrecken.

12. Kraftübertragungsvorrichtung nach einem der vorhergehenden Ansprüche,
**dadurch gekennzeichnet, dass** jedem Ende der Kraftübertragungsvorrichtung ein Sperrglied (36, 38) zugeordnet ist und die Sperrglieder (36, 38) auf der Kupplungshülse (14) axial verschiebbar gelagert sind, und Druckfedern (48) die definierte Lage der Sperrglieder (36, 38) zur radialen Abstützung der Verriegelungselemente (28, 30) festlegen.

13. Kraftübertragungsvorrichtung nach Anspruch 12,
**dadurch gekennzeichnet, dass** die Sperrglieder (36, 38) ein AuftragsmaB auf der Kupplungshülse (14) aufweisen, das den Schaft-Nenndurchmesser nicht übersteigt und insbesondere etwa 1/6 des Schaft-Nenndurchmessers beträgt.

14. Kraftübertragungsvorrichtung nach Anspruch 12 oder 13,
**dadurch gekennzeichnet, dass** jedes Sperrglied (36, 38) innen gestuft ausgebildet ist und im rückspringenden Bereich eine Feder (48), insbesondere eine Druckfeder angebracht ist, die das Sperrglied (36, 38) in der Verriegelungsstellung positionieren und insbesondere die Verriegelungselemente (28, 30) in der Einraststellung der Enden radial fixieren.

15. Kraftübertragungsvorrichtung nach einem der Ansprüche 12 bis 14,
**dadurch gekennzeichnet, dass** die Enden von Kopfteil (54) und Schaftteil (56) in Stoßflächen auslaufen, die plan, konvex oder konkav ausgebildet sind und an ihrem Umfang je eine zurückspringende Geometrie, insbesondere eine Fase aufweisen.

16. Kraftübertragungsvorrichtung nach einem der Ansprüche 12 bis 15,
**dadurch gekennzeichnet, dass** Nuten in den Enden von Kopf teil (54) bzw. Schaftteil (56), in denen sich die Verriegelungselemente (28, 30) in der Verriegelungsstellung befinden, deutlich länger als der Schlaghub des Bohrhammers oder der Schlagbohrmaschine, in welcher das Bohrwerkzeug (12) eingesetzt ist, sind und dass die Nuten endseitig an den Schaft- und Kopfteilen (54, 56) dieser Enden geschlossen sind.

17. Kraftübertragungsvorrichtung nach einem der vorhergehenden Ansprüche,
**dadurch gekennzeichnet, dass** die Kupplungshülse (14) eine Länge aufweist, die mehr als dem fünffachen und weniger als dem zwanzigfachen, insbesondere etwa dem zehnfachen, Schaftdurchmesser der Enden entspricht.

18. Kraftübertragungsvorrichtung nach einem der vorhergehenden Ansprüche,
**dadurch gekennzeichnet, dass** die Sperrglieder (36, 38) sich ringförmig um die Kupplungshülse (14) erstrecken und zwischen axialen Anschlaghülsen schiebebeweglich sind und zwischen radialen Anschlägen drehbeweglich sind.

19. Kraftübertragungsvorrichtung nach einem der vorhergehenden Ansprüche,
**dadurch gekennzeichnet, dass** die Ausnehmungen (52) in den Sperrgliedern (36, 38) die Verriegelungselemente (28, 30) auch in der Entriegelungsposition unverlierbar lagern.

20. Kraftübertragungsvorrichtung nach einem der vorhergehenden Ansprüche,
**dadurch gekennzeichnet, dass** die Kupplungshülse (14) je endseitig zum Kopfteil (54) hin bzw. zum Schaftteil (56) hin abgeschlossen, insbesondere abgedichtet, ist.

21. Kraftübertragungsvorrichtung nach einem der vorhergehenden Ansprüche,
**dadurch gekennzeichnet, dass** die Drehmitnahmeelemente (32, 76, 78) und die Verriegelungselemente (28, 30) abwechselnd, insbesondere im rechten Winkel zueinander, um den Umfang der Kupplungshülse (14) verteilt positioniert sind.

22. Kraftübertragungsvorrichtung nach einem der vorhergehenden Ansprüche,
**dadurch gekennzeichnet, dass** die Drehmitnahmeelemente (32, 76, 78) und die Verriegelungselemente (28, 30) nach dem SDS-plus-Standard um den Umfang der Kupplunshülse (14) verteilt sind.

23. Kraftübertragungsvorrichtung nach einem der Ansprüche 1 bis 20,
**dadurch gekennzeichnet, dass** die Drehmitnahmeelemente (32, 76, 78) und die Verriegelungselemente (28, 30) nach dem SDS max Standard um den Umfang der Kupplunshülse (14) verteilt sind.

24. Kraftübertragungsvorrichtung nach einem der vorhergehenden Ansprüche,
**dadurch gekennzeichnet, dass** Verriegelungselemente (28, 30) aus verschleißbeständigem metallischem Material, insbesondere Hartmetall oder gehärtetem Werkzeugstahl, hergestellt ist.

25. Kraftübertragungsvorrichtung nach einem der vorhergehenden Ansprüche,
**dadurch gekennzeichnet, dass** die Außenform rund, mehreckig, insbesondere zylindrisch gestaltet ist und die maximale Außenabmessung quer zur Werkzeuglängsachse zwischen dem 1,5-fachen und dem 2,5-fachen, insbesondere aber kleiner oder gleich dem 1,7-fachen des Schaftnenndurchmessers der Enden (58, 60), beträgt.

26. Kraftübertragungsvorrichtung nach einem der vorhergehenden Ansprüche,
**dadurch gekennzeichnet, dass** die Kraftübertragungsvorrichtung (10) als Teil einer Bohrvorrichtung, zur lösbaren Lagerung eines Schaftteils, das in ein Bohrfutter einer Bohrmaschine oder eines Bohrfutters allgemein lösbar sowie zur lösbaren Lagerung eines Kopfteils eines Bohr- oder Meißelwerkzeugs einsetzbar ist.

27. Kraftübertragungsvorrichtung nach Anspruch 26,
**dadurch gekennzeichnet, dass** das Kopfteil (54) der Bohrvorrichtung für die Aufnahme in der Kraftübertragungsvorrichtung (10) bestimmt ist.

28. Kraftübertragungsvorrichtung nach einem der Ansprüche 26 oder 27,
**dadurch gekennzeichnet, dass** die Kraftübertragungsvorrichtung (10) mittels mindestens eines oder mehreren lösbaren Zwischenstücken mit mindestens einer oder mehreren weiteren Kraftübertragungsvorrichtungen verbindbar ist.

29. Kraftübertragungsvorrichtung zur lösbaren Verbindung eines Kopfteils (54) eines Bohr- oder Meißelwerkzeugs an einem Schaftteil (56) eines Bohr- oder Meißelwerkzeugs, mit welcher verschiedene Schaftteilenden mit unterschiedlichen Kopfteilen verschiedener Bohr- oder Meißelwerkzeuge kombiniertbar sind, wobei die Kraftübertragungsvorrichtung eine Mehrzahl von Verriegelungselementen (28, 30) aufweist, die für den Eingriff in Nuten des Kopfteilendes und des Schaftteilendes bestimmt sind und an einer Kupplungshülse (14) radial beweglich gelagert sind, wobei die Kupplungshülse (14) fest verbundene Drehmitnahmeelemente (32) aufweist,
**dadurch gekennzeichnet, dass** Sperrglieder (36, 38) vorgesehen sind, die die Verriegelungselemente (28, 30) radial abstützen, wobei die Sperrglieder (36, 38) zwischen Drehanschlägen drehbeweglich gelagert sind, und wobei die Sperrglieder (36, 38) Ausnehmungen (52) aufweisen, welche derart angeordnet sind, dass sie an einer entsprechenden Drehposition eine radiale Bewegung der Verriegelungselemente (28, 30) für das Lösen der Verbindung zwischen Kopfteil (54) und Schaftteil (56) ermöglichen und in einer anderen Drehposition, die Verriegelungselemente (28, 30) in einer Verriegelungsstellung bringbar sind.

30. Kraftübertragungsvorrichtung nach Anspruch 29,
**dadurch gekennzeichnet, dass** jeder der Verriegelungselemente (28, 30) zwei Flügel (68, 70) aufweist, die sich mindestens teilweise in tangentialer Richtung erstrecken.

31. Kraftübertragungsvorrichtung nach einem der Ansprüche 29 oder 30,
**dadurch gekennzeichnet, dass** über die Verriegelungselemente (28, 30) die zu verbindenden Teile des Bohr- oder Meißelwerkzeugs lösbar aneinander festhalten, und dass die Kupplungshülse (14) sowohl in der Freigabestellung als auch in der Verriegelungsstellung eine im Wesentlichen glatte Außenfläche aufweist.

## Claims

1. A power transmission device for detachably supporting a head piece (54) and a shaft piece (56), each comprising at least one locking element (28; 30) destined to engage in grooves of the end of the head piece and grooves of the end of the shaft piece and which is mounted on a coupling sleeve (14), wherein at least one blocking member (36, 38) surrounding and blocking the locking elements (28, 30), is mounted in a rotatably movable manner, and in particular also in a axially movable manner on the coupling sleeve, said coupling sleeve (14) comprising additional rotary-driving elements (32, 76, 78),
**characterized in that** the at least one blocking member (36, 38) comprises recesses (52) that are arranged in such a manner that they enable a radial movement of the locking elements (28, 30) for disconnecting the connection between the head piece and the shaft piece at a corresponding rotary position, and at a different rotary position, the locking elements (28, 30) may be brought into a locking position.

2. The power transmission device as claimed in claim 1,
**characterized in that** the blocking member (36, 38) each comprises a recess (52) for each locking element (28, 30, 70, 72), wherein the locking elements (28, 30) are substantially diametrically opposite each other.

3. The power transmission device as claimed in one of the preceding claims,
**characterized in that** the blocking member (36, 38) is supported in a rotary movable manner on the coupling sleeve about a given angle, in particular 30° to 150° and preferably approximately about 90°.

4. The power transmission device as claimed in one of the preceding claims,
**characterized in that** the mounting of the blocking member (36, 38) on the coupling sleeve (14) comprises a detent position in which the locking element (28, 30) snaps into place or latches in a torsion-resistant manner in the locking position and thus prevents the locking elements (28, 30) from moving in a radial direction.

5. The power transmission device as claimed in one of the preceding claims,
**characterized in that** the blocking member (36, 38) comprises a journal (44) that engages in a corresponding journal recess in a guide sleeve (20, 22) in the locked position, said guide sleeve being connected to the coupling sleeve in a rotationally fixed or torque-proof manner.

6. The power transmission device as claimed in claim 5,
**characterized in that** the blocking member (36, 38) and the guide sleeve (20, 22) comprise a flush outer surface in the locked position.

7. The power transmission device as claimed in one of the preceding claims,
**characterized in that** the blocking member (36, 38) is formed as a closed sleeve that comprises a substantially smooth outer surface.

8. The power transmission device as claimed in one of the preceding claims,
**characterized in that** each locking element (28, 30) comprises a guide receiving means (24, 26) in the coupling sleeve (14) that in particular extends between two axial planar, convex and concave, in particular flat stop surfaces, between which the locking element (28, 30) is guided.

9. The power transmission device as claimed in one of the preceding claims,
**characterized in that** one guide receiving means (24, 26) in the coupling sleeve (14) for the locking element (28, 30) in particular comprises inclined and flat bearing surfaces (73, 74) that serve to radially support the locking element (28, 30) inwardly and that work together with flanks or wings (68, 70) of the locking element.

10. The power transmission device as claimed in one of the preceding claims,
**characterized in that** each locking element (28, 30) comprises a blocking portion and a bearing portion (72, 74) that extends radially outside the blocking portion, that the blocking portion has a cross-section in the form of a portion of a circle, and that flanks or wings (68, 70) of the bearing portion (73, 74) extend from the blocking portion in a tangential direction of the coupling sleeve (14) and in particular the bearing portion comprises an outside radius that substantially corresponds to the outside radius of the coupling sleeve (14).

11. The power transmission device as claimed in one of the preceding claims,
**characterized in that** bearing surfaces (72, 74) of a guide recess in the coupling sleeve (14) for the locking element (28, 30) and the bearing surface of flanks or wings (68, 70) of a receiving portion of the locking element (28, 30) extend in an angle of 60° to 160°, in particular approximately 120°, relative to one another.

12. The power transmission device as claimed in one of the preceding claims,
**characterized in that** a blocking member (36, 38) is assigned to each end of the power transmission device and that the blocking members (36, 38) are mounted on the coupling sleeve (14) in an axially slidable manner, and that pressure springs (48) determine the defined position of the blocking members (36, 38) in order to radially support the locking elements (28, 30).

13. The power transmission device as claimed in claim 12,
**characterized in that** the blocking members (36, 38) have an applied dimension on the coupling sleeve (14) that does not exceed the nominal diameter of the shaft and in particular amounts to approximately 1/6 of the shaft nominal diameter.

14. The power transmission device as claimed in claim 12 or 13,
**characterized in that** each blocking member (36, 38) is designed so as to be stepped inside, and a spring (48), in particular a pressure spring, is arranged in the recessed area that positions the blocking member (36, 38) in the locking position and in particular radially secures the locking elements (28, 30) in the snap-in position of the ends thereof.

15. The power transmission device as claimed in one of the claims 12 to 14,
**characterized in that** the ends of the head piece (54) and of the shaft piece-(56) end in abutting surfaces that are formed in a planar, convex or concave manner and that comprise a recessed or set-back geometry, in particular a chamber-bevel.

16. The power transmission device as claimed in one of the claims 12 to 15,
**characterized in that** grooves in the ends of the head piece (54) and the shaft piece (56), respectively, in which the locking elements (28, 30) rest in the locking position, are notedly longer than the blow stroke of the drill hammer or impact drilling machine, in which the drilling tool (12) is inserted, and that the groves in the ends of the shaft pieces and head pieces (54, 56) comprise closed ends.

17. The power transmission device as claimed in one of the preceding claims,
**characterized in that** the coupling sleeve (14) comprises a length that corresponds to more than five times and less than twenty times, in particular to approximately ten times the shaft diameter of the ends.

18. The power transmission device as claimed in one of the preceding claims,
**characterized in that** the blocking members (36, 38) extend ringlike around the coupling sleeve (14) and are slidably movable between axial stop sleeves and rotatably movable between radial stops.

19. The power transmission device as claimed in one of the preceding claims,
**characterized in that** the recesses (52) in the blocking members (36, 38) captively support the locking elements (28, 30) also in the release or unlocking position.

20. The power transmission device as claimed in one of the preceding claims,
**characterized in that** the coupling sleeve (14) at each end is closed, in particular is sealed, against the head piece (54) and the shaft piece (56), respectively.

21. The power transmission device as claimed in one of the preceding claims,
**characterized in that** the rotary-driving elements (32, 76, 78) and the locking elements (289, 30) alternately, in particular perpendicularly to one another, are positioned around the periphery of the coupling sleeve (14) in a distributed manner.

22. The power transmission device as claimed in one of the preceding claims.
**characterized in that** the rotary-driving elements (32, 76, 78) and the locking elements (28, 30) are distributed around the periphery of the coupling sleeve (14) according to the SDS-plus standard.

23. The power transmission device as claimed in one of the claims 1 to 20,
**characterized in that** the rotary-driving elements (32, 76, 78) and the locking elements (28, 30) are distributed around the periphery of the coupling sleeve (14) according to the SDS-max standard.

24. The power transmission device as claimed in one of the preceding claims,
**characterized in that** the locking elements (28, 30) are manufactured from wear-resistant metal material, in particular hard metal or hardened tool steel.

25. The power transmission device as claimed in one of the preceding claims,
**characterized in that** the external shape is round, polygonal, in particular cylindrical, and that the maximum external dimension transversely to the tool longitudinal axis amounts to between 1.5 times and 2.5 times, in particular, however, smaller than or equal to 1.7 times the shaft nominal diameter of the ends (58, 60).

26. The power transmission device as claimed in one of the preceding claims,
**characterized in that** the power transmission device (10) may be employed as a part of a drilling device for detachably supporting a shaft piece that is detachably insertable into a drill chuck of a drilling machine or into a drill chuck in general, as well as for detachably supporting a head piece of a drilling or chiselling tool.

27. The power transmission device as claimed in claim 26,
**characterized in that** the head piece (54) of the drilling device is adapted to receive the power transmission device (10).

28. The power transmission device as claimed in one of the claims 26 or 27,
**characterized in that** the power transmission device (10) is connectable to one or several further power transmission devices by means of at least one or several detachable intermediate pieces.

29. The power transmission device for detachably connecting a head piece (54) of a drilling or chiselling tool to a shaft piece (56) of a drilling or chiselling tool, by means of which different shaft piece ends may be combined with different head pieces of various drilling or chiselling tools, wherein the power transmission device comprises a plurality of locking elements (28, 30) that are configured for engagement in grooves of the head piece end and of the shaft piece end and that are mounted in a radial movable manner on a coupling sleeve (14), wherein the coupling sleeve (14) comprises fixedly connected rotary-driving elements (32),
**characterized in that** blocking members (36, 38) are provided for radially supporting the locking elements (28, 30), wherein said blocking members (36, 38) are mounted between rotary stops in a rotatably movable manner, and wherein the blocking members (36, 38) comprise recesses (52) that are arranged such that they enable radial movement of the locking elements (28, 30) at a corresponding rotary position in order to unlock the connection between the head piece (54) and the shaft piece (56), and at a different rotary position, the locking elements (28, 30) may be brought into a locking position.

30. The power transmission device as claimed in claim 29,
**characterized in that** each locking element (28, 30) comprises two flanks or wings (68, 70) that at least partially extend in a tangential direction.

31. The power transmission device as claimed in one of the claims 29 or 30,
**characterized in that** the parts to be connected of the drilling or chiselling tool detachably keep hold of one another by means of the locking elements (28, 30), and that the coupling sleeve (14) both in the release position and the locking position comprises a substantially smooth outer surface.

## Revendications

1. Dispositif de transmission de force pour loger détachablement une section de tête (54) et une section de tige (56), ayant chacune au moins un élément de verrouillage (28, 30) prévu pour s'engager dans les rainures de l'extrémité de la section de tête et l'extrémité de la section de tige et monté sur un manchon d'accouplement (14), où au moins un élément de blocage (36, 38) entourant mobile en rotation et de préférence aussi axialement mobile les éléments de verrouillage (28, 30) sur le manchon d'accouplement, où le manchon d'accouplement (14) présente des éléments supplémentaires d'entraînement en rotation (32 76, 70), **caractérisé en ce qu'**au moins un élément de blocage (36, 30) présente des évidements de matière (52) qui sont disposés de telle manière que dans une position rotative spécifique elles permettent un mouvement radial des éléments de verrouillage (28, 30) pour relâcher la connexion entre la section de tête et la section de tige et dans une autre position rotative elles mettent les éléments de verrouillage (28, 30) dans une position de verrouillage.

2. Dispositif de transmission de force selon la revendication 1, **caractérisé en ce que** l'élément de blocage (36, 38) présente un évidement de matière (52) pour chaque élément de verrouillage (28, 30, 70, 72), où les éléments de verrouillage (28, 30) se trouvent essentiellement diamétralement opposés.

3. Dispositif de transmission de force selon l'une des revendications précédentes, **caractérisé en ce que** l'élément de blocage (36, 38) est logé orientablement sur le manchon d'accouplement (14) autour d'un angle prédéterminé, entre 30° à 150° et de préférence autour de 90°.

4. Dispositif de transmission de force selon l'une des revendications précédentes, **caractérisé en ce que** le logement de l'élément de blocage (36, 38) sur le manchon d'accouplement (14) présente une position d'arrêt, dans laquelle l'élément de verrouillage (28, 30) s'engage ou s'encliquette en position de verrouillage avec une sécurité anti-rotation et empêche ainsi un mouvement radial des éléments de verrouillage (28, 30).

5. Dispositif de transmission de force selon l'une des revendications précédentes, **caractérisé en ce que** l'élément de blocage (36, 38) présente un tourillon (44) qui s'engage fixe en rotation en position de verrouillage dans un évidement de matière de tourillon correspondante d'un un manchon de guide (20, 22) connecté au manchon d'accouplement.

6. Dispositif de transmission de force selon la revendication 5, **caractérisé en ce que** l'élément de blocage (36, 38) et les manchons de guidage (20, 22) présentent une surface extérieure au même niveau dans la position de verrouillage.

7. Dispositif de transmission de force selon l'une des revendications précédentes, **caractérisé en ce que** l'élément de blocage (36, 38) est formé comme manchon fermé qui présente une surface extérieure essentiellement lisse.

8. Dispositif de transmission de force selon l'une des revendications précédentes, **caractérisé en ce que** chaque élément de verrouillage (28, 30) présente un logement de guidage (24, 26) dans le manchon d'accouplement (14) qui s'étend de préférence entre deux surfaces de butée axialement planes, convexes et concaves, de préférence égales, entre lesquels l'élément de verrouillage (28, 30) est guidé.

9. Dispositif de transmission de force selon l'une des revendications précédentes, **caractérisé en ce qu'**un logement de guide (24, 26) dans le manchon d'accouplement (14) pour l'élément de verrouillage (28, 30) présente de préférence des surfaces d'appui (73, 74) en diagonale et à niveau qui servent au soutien radial vers l'intérieur de l'élément de verrouillage (28, 30) et agissent ensemble avec les ailes (68, 70) des éléments de verrouillage.

10. Dispositif de transmission de force selon l'une des revendications précédentes, **caractérisé en ce que** chaque élément de verrouillage (28, 30) présente une section de blocage et une section d'appui (72, 74) qui s'étend radialement à l'extérieur de la section de blocage, que la section de blocage est formée comme section circulaire dans la coupe transversale, et que des ailes (68, 70) de la section d'appui (73, 74) s'étendent depuis la section de blocage dans le sens tangentiel du manchon d'accouplement (14) et de préférence la section d'appui présente vers l'extérieur un rayon qui correspond essentiellement au rayon extérieur du manchon d'accouplement (14).

11. Dispositif de transmission de force selon l'une des revendications précédentes, **caractérisé en ce que** des surfaces d'appui (72, 74) d'un évidement de matière de guidage dans le manchon d'accouplement (14) pour l'élément de verrouillage (28, 30) et la surface d'appui d'ailes (68, 70) d'une section de logement de l'élément de verrouillage (28, 30) s'étendent dans un angle de 60° à 160°, de préférence environ 120°.

12. Dispositif de transmission de force selon l'une des revendications précédentes, **caractérisé en ce qu'**un élément de blocage (36, 38) est assigné à chaque extrémité du dispositif de transmission de force et que les éléments de blocage (36, 38) sont logés axialement déplaçable sur le manchon d'accouplement (14), et des ressorts à pression (48) fixent la position définie des éléments de blocage (36, 38) pour soutenir radialement les éléments de verrouillage (28, 30).

13. Dispositif de transmission de force selon la revendication 12, **caractérisé en ce que** les éléments de blocage (36, 38) présentent une surépaisseur sur le manchon d'accouplement (14) qui ne dépasse pas le diamètre nominal de la tige et mesure de préférence environ 1/6 du diamètre nominal de la tige.

14. Dispositif de transmission de force selon la revendication 12 ou 13, **caractérisé en ce que** chaque élément de blocage (36, 38) est formé gradué à l'intérieur et dans la zone en creux un ressort (48), de préférence un ressort à pression, est fourni, qui fixent l'élément de blocage (36, 38) dans la position de verrouillage et de préférence fixent les éléments de verrouillage (28, 30) radialement dans la position d'engagement des extrémités.

15. Dispositif de transmission de force selon l'une des exigences 12 à 14, **caractérisé en ce que** les extrémités de la section de tête (54) et de la section de tige (56) se terminent en surfaces d'impact qui sont formées planes, convexes ou concaves et présentent à leur surface une géométrie creuse, de préférence un chanfrein.

16. Dispositif de transmission de force selon l'une des exigences 12 à 15, **caractérisé en ce que** des rainures dans les extrémités de la section de tête (54) ou de la section de tige (56), dans lesquels les éléments de verrouillage (28, 30) se trouvent en position de verrouillage, sont nettement plus longues que la course d'impact du marteau de perçage ou de la perceuse à percussion, dans lequel l'outil de perçage (12) est inséré, et que les rainures sont fermées sur les extrémités des sections de tête ou de tige (54, 56) de ces extrémités.

17. Dispositif de transmission de force selon l'une des revendications précédentes **caractérisé en ce que** le manchon d'accouplement (14) présente une longueur qui correspond à plus de cinq fois et moins de vingt fois, de préférence environ dix fois le diamètre de tige des extrémités.

18. Dispositif de transmission de force selon l'une des revendications précédentes, **caractérisé en ce que** les éléments de blocage (36, 38) s'étendent en anneau autour du manchon d'accouplement (14) et sont mobiles en coulissement entre le manchon de butée axial et sont mobiles en rotation entre des butées radiales.

19. Dispositif de transmission de force selon l'une des revendications précédentes **caractérisé en ce que** les évidements de matière (52) logent les éléments de verrouillage (28, 30) captifs dans les éléments de blocage (36, 38) même en position déverrouillée.

20. Dispositif de transmission de force selon l'une des revendications précédentes, **caractérisé en ce que** le manchon d'accouplement (14) est fermé, de préférence scellé, aux extrémités de la section de tête (54) et/ou de la section de tige (56).

21. Dispositif de transmission de force selon l'une des revendications précédentes, **caractérisé en ce que** les éléments d'entraînement en rotation (32, 76, 78) et les éléments de verrouillage (28, 30) sont positionnés en alternance, de préférence dans l'angle droit les uns aux autres, autour de la surface du manchon d'accouplement (14).

22. Dispositif de transmission de force selon l'une des revendications précédentes, **caractérisé en ce que** les éléments d'entraînement en rotation (32, 76, 78) et les éléments de verrouillage (28, 30) sont distribués autour de la surface du manchon d'accouplement (14) selon le standard SDS-plus.

23. Dispositif de transmission de force selon l'une des exigences I à 20, **caractérisé en ce que** les éléments d'entraînement en rotation (32, 76, 78) et les éléments de verrouillage (28, 30) sont distribués sont distribués autour de la surface du manchon d'accouplement (14) selon le standard SDS-Max.

24. Dispositif de transmission de force selon l'une des revendications précédentes, **caractérisé en ce que** les éléments de verrouillage (28, 30) sont fabriqués en matière métallique résistante à l'usure, de préférence en alliage dur aux carbures frittés ou de l'acier à outils durci.

25. Dispositif de transmission de force selon l'une des revendications précédentes, **caractérisé en ce que** la forme extérieure est formée ronde, polygonale, de préférence cylindrique et que la mesure extérieure maximale diagonale à l'axe longitudinal d'outil s'élève entre 1,5 et 2,5 fois, de préférence toutefois plus petit ou 1,7 fois le diamètre nominal de tige des extrémités (58, 60).

26. Dispositif de transmission de force selon l'une des revendications précédentes, **caractérisé en ce que** le dispositif de transmission de force (10) comme partie d'un dispositif de perçage, pour le logement amovible d'une section de tige qui est insérable dans un mandrin de perçage d'un appareil de perçage ou d'un mandrin de perçage général ainsi qu'au logement amovible d'une section de tête d'un outil de perçage ou de burin.

27. Dispositif de transmission de force selon la revendication 26, **caractérisé en ce que** la section de tête (54) du dispositif de perçage est prévu pour être logée dans le dispositif de transmission de force (10).

28. Dispositif de transmission de force selon l'une des revendications 26 ou 27, **caractérisé en ce que** le dispositif de transmission de force (10) au moyen d'au moins une ou plusieurs pièces intermédiaires amovibles est raccordable avec au moins un ou plusieurs autres dispositifs de transmission.

29. Dispositif de transmission de force pour la connexion amovible d'une section de tête (54) d'un outil de burin ou de perçage à une section de tige (56) d'un outil de burin ou de perçage, avec lequel diverses extrémités de sections de tige sont combinables avec des sections de tête diverses de différents outils de burin ou de perçage, où le dispositif de transmission de force présente une pluralité d'éléments de verrouillage (28, 30) qui sont prévus à l'insertion dans des rainures de l'extrémité de la section de tête et la section de tige et sont logés sur un manchon d'accouplement (14) radialement mobile, où le manchon d'accouplement (14) présente des éléments d'entraînement en rotation reliés solidement (32), **caractérisé en ce que** des éléments de blocage (36, 38) sont prévus qui soutiennent radialement les éléments de verrouillage (28, 30), où les éléments de blocage {36, 38) sont logés mobiles en rotation entre des butées rotatifs, et où les éléments de blocage (36, 38) présentent des évidements (52) qui sont disposés de telle manière que dans une position rotative spécifique elles permettent un mouvement radial des éléments de verrouillage (28, 30) pour relâcher la connexion entre la section de tête (54) et la section de tige (56) et dans une autre position rotative elles mettent les éléments de verrouillage (28, 30) dans une position de verrouillage.

30. Dispositif de transmission de force selon la revendication 29, **caractérisé en ce que** chacun des éléments de verrouillage (28, 30) présente deux ailes (68, 70) qui s'étendent au moins dans une direction tangentielle.

31. Dispositif de transmission de force selon l'une des exigences 29 ou 30, **caractérisé en ce que** les parties de l'outil de burin ou de perçage à relier restent amovibles ensemble par les éléments de verrouillage (28, 30), et que le manchon d'accouplement (14) aussi bien dans la position de libération que dans la position de verrouillage présente une surface extérieure essentiellement lisse.
